# EUROPÄISCHE PATENTANMELDUNG

(11) **EP 3 796 755 A1**
(43) Veröffentlichungstag der Anmeldung: **24.03.2021**
(21) Anmeldenummer: 19198115.8
(22) Anmeldetag: 18.09.2019
(51) Int. Cl.: H05B 6/10, H05B 6/06, H05B 6/42, H05B 6/40, B29C 64/295

(54) **KOMPAKTES INDUKTIONSHEIZSYSTEM MIT BEWEGBARER SPULE**

(71) Anmelder: Siemens Aktiengesellschaft, 80333 München (DE)
(72) Erfinder: Goldammer, Matthias, 80687 München (DE); Mooshofer, Hubert, 81541 München (DE)

(57) **Zusammenfassung**

Die Erfindung betrifft eine Induktionsheizsystem zur Erwärmung eines Bauteils (1), wobei die Induktionsheizsystem eine Wechselspannungsversorgungseinrichtung (10), einen Kondensator (20), eine Verschiebeeinheit (30) und eine Induktionsspule (40) aufweist. Die Wechselspannungsversorgungseinrichtung (10) versorgt einen Reihenschwingkreis, der von dem Kondensator (20) und der Induktionsspule (40) gebildet wird, mit Wechselspannung. Die Verschiebeeinheit (30) ermöglicht eine Verschiebung der Induktionsspule (40) lateral in mindestens einer Richtung (37, 38) relativ zu dem Bauteil (1). Der Kondensator (20) ist zwischen der Verschiebeeinheit (30) und der Induktionsspule (40) angeordnet. Ferner betrifft die Erfindung eine Vorrichtung zur generativen Fertigung eines Bauteils (1) mit einer solchen Induktionsheizsystem.

## Beschreibung

Die Erfindung betrifft ein Induktionsheizsystem zur Erwärmung eines Bauteils sowie eine Vorrichtung zur generativen Fertigung eines Bauteils mit einer solchen Induktionsheizsystem.

Induktives Erwärmen ist ein Verfahren, um elektrisch leitfähige Körper durch in ihnen erzeugte Wirbelstromverluste zu erwärmen. Ein Induktionsheizsystem verwendet hierfür eine von Wechselstrom durchflossene Spule, die auch als Induktionsspule oder Induktor bezeichnet wird. Die Spule erzeugt ein magnetisches Wechselfeld, das im Material Wirbelströme induziert. Induktives Erwärmen findet zum Beispiel Anwendung beim Glühen, Löten, Schweißen, Schmelzen, Aufschrumpfen oder bei der Materialprüfung.

Vor nicht allzu langer Zeit kam die Idee auf, induktives Erwärmen auch bei der generativen Fertigung eines Bauteils einzusetzen. Hierfür wird zum Beispiel ein pulver- oder drahtförmiger metallischer Werkstoff, der schichtweise auf eine Plattform aufgetragen wird, vor dem Aufschmelzen vorgewärmt. Alternativ kann der aufgeschmolzene Werkstoff auch nach dem Aufschmelzen induktiv erwärmt werden. In beiden Fällen kann bei geeigneten Prozessparametern eine Verbesserung der Materialqualität des generativ gefertigten Bauteils erwartet werden.

Die Heizleistung des Induktors wirkt in der Regel nur in einem kleinen Bereich, üblicherweise innerhalb weniger Zentimeter, um die Spule. Bei der generativen Fertigung eines Bauteils, beispielsweise mittels selektiven Laserschmelzens, ist jedoch eine im Vergleich dazu große Fläche zu erwärmen. Folglich wird eine verschiebbare (in anderen Worten: verfahrbare) Primärheizeinrichtung, z.B. eine Laserstrahlquelle, mit der Induktionsspule ausgestattet, so dass diese auch relativ zu dem Bauteil verschiebbar ist. Der Rest des Induktionsheizsystems kann wie bisher verwendet werden.

Ein Induktionsheizsystem weist bekanntermaßen einen Reihenschwingkreis auf, der von einem Kondensator und der Induktionsspule gebildet wird und von einer Wechselspannungsversorgungseinrichtung mit Wechselspannung versorgt wird. Um eine hohe Heizleistung des Induktionsheizsystems zu erreichen, wird üblicherweise ein hoher Strom im Schwingkreis vorgegeben. Dies wird beispielsweise mithilfe eines Induktionsgenerators, der hohe Spannungen bis zu einigen Kilovolt erzeugt, und eines Transformators erreicht, der diese hohe Eingangswechselspannung in eine niedrige Ausgangswechselspannung, aber einen hohen Strom transformiert. Im Reihenschwingkreis liegt effektiv eine niedrige Spannung an, es existiert jedoch eine hohe Blindwechselspannung.

Folglich besteht eine Herausforderung darin, dass an den elektrischen Leitungen des Induktionsheizsystems sowohl eine hohe Spannung anliegt als auch hohe Ströme durchfließen. Die hohen Ströme verursachen vor allem Wärme, die abgeführt werden muss. Die hohe Spannung stellt ein Risiko dar, dass es zu einem Spannungsüberschlag kommen kann, welches zu einem Ausfall der Anlage oder im schlimmsten Fall zu einer Gefährdung des Bedienpersonals der Anlage führen kann.

Es ergibt sich somit das Problem, dass die Zuleitungen der verfahrbaren Spule sowohl vor Überhitzung als auch gegen Spannungsüberschläge geschützt werden müssen.

Gegen eine Überhitzung der Leitungen ist eine Kühlung, z.B. mit Wasser, bekannt. Wassergekühlte elektrische Kabel eignen sich in der Regel jedoch nicht für häufige Verbiegungen, wie sie bei einem Induktionsheizsystem mit bewegter Spule auftreten. Aus diesem Grund werden zum Beispiel wassergekühlte Kupferschienen verwendet. Die Verschiebbarkeit der Induktionsspule kann in diesem Fall mit einem Schlitten, der auf der Schiene verschiebbar ist und mittels eines Schleifkontakts elektrisch mit der Schiene verbunden ist, realisiert werden. Wassergekühlte Kupferschienen und Schleifkontakte sind in der Lage den Strom im Bereich von mehreren 100 A zu leiten, allerdings liegt auch eine hohe Spannung von mehreren 100 V an. Daher muss zusätzlich zur Stromfestigkeit auch die Spannungssicherheit sichergestellt werden. Während die Regelung des Induktionsgenerators in der Lage ist, auf Änderungen in Induktivität oder Leitungswiderstand zu reagieren, können Überschläge zu Systemausfällen führen. Daher ist die Betriebssicherheit dieser Lösung gering und kann zu Ausfällen führen. Als Gegenmaßnahme muss die Maximalleistung begrenzt werden.

Es besteht daher die Aufgabe, ein im Vergleich zum Stand der Technik verbessertes Induktionsheizsystem mit verschiebbarer Induktionsspule sowie eine im Vergleich zum Stand der Technik verbesserte Vorrichtung zur generativen Fertigung eines Bauteils mit einem solchen Induktionsheizsystem bereitzustellen.

Diese Aufgaben werden durch die Gegenstände der unabhängigen Ansprüche gelöst. Vorteilhafte Ausführungsformen sind in den abhängigen Ansprüchen spezifiziert.

Die Erfindung umfasst ein Induktionsheizsystem zur Erwärmung eines Bauteils, wobei das Induktionsheizsystem eine Wechselspannungsversorgungseinrichtung, einen Kondensator, eine Verschiebeeinheit und eine Induktionsspule aufweist. Die Wechselspannungsversorgungseinrichtung versorgt einen Reihenschwingkreis, der von dem Kondensator und der Induktionsspule gebildet wird, mit Wechselspannung. Die Verschiebeeinheit ermöglicht eine Verschiebung der Induktionsspule lateral in mindestens einer Richtung relativ zu dem Bauteil. Der Kondensator ist zwischen der Verschiebeeinheit und der Induktionsspule angeordnet.

Der Erfindung liegt die Idee zugrunde, den Kondensator möglichst nahe an der Induktionsspule zu platzieren, um den Reihenschwingkreis, in dem die hohen Blindspannungen vorliegen, örtlich zu beschränken. Da die Blindspannungen nur in denjenigen elektrischen Leitungen (im Rahmen dieser Anmeldung auch als "Zuleitungen" bezeichnet) vorliegen, die zwischen dem Kondensator und der Spule verlaufen, sind auch nur diese Leitungen bzw. nur diese entsprechenden Gebiete der Gefahr von Spannungsüberschlägen ausgesetzt. Insbesondere der Bereich an der Verschiebeeinheit, der herkömmlicherweise besonders anfällig für Spannungsüberschläge ist, ist durch die Platzierung des Kondensators "hinter" der Verschiebeeinheit (aus Sicht einer Stromrichtung, die von der Wechselspannungsversorgungseinrichtung zur Induktionsspule verläuft) diese nicht mehr der vergleichsweise hohen Blindspannung, sondern nur noch der vergleichsweise niedrigen effektiv anliegenden Wechselspannung ausgesetzt.

In einer vorteilhaften Ausführungsform der Erfindung umfasst die Wechselspannungsversorgungseinrichtung einen Induktionsgenerator zur Erzeugung einer Eingangswechselspannung und einen Transformator zur Umwandlung der Eingangswechselspannung in eine Ausgangswechselspannung.

Der Induktionsgenerator erzeugt beispielsweise eine Wechselspannung mit einer Frequenz zwischen wenigen Kilohertz und einigen Megahertz sowie einer Spannung bis zu 2.000 Volt. Diese Spannung kann mittels eines Kabels zu einem Transformator geführt werden, der diese hohe Spannung als Eingangswechselspannung in eine niedrigere Ausgangswechselspannung transformiert. Damit einhergehend wird jedoch eine relativ niedrige Eingangsstromstärke in eine hohe Ausgangsstromstärke transformiert, die der Induktionsspule zur Verfügung steht.

Die Verschiebeeinheit ist dazu imstande, die Induktionsspule zumindest in einer Richtung seitwärts (in anderen Worten: lateral) zu verschieben (in anderen Worten: zu verfahren oder zu bewegen). Die laterale Verschiebung bezieht sich dabei auf eine seitliche Verschiebung bezüglich des Bauteils. Es ist also insbesondere keine Verschiebung senkrecht zur Oberfläche des Bauteils, also zu diesem hin oder von diesem weg, gemeint. Diese Verschiebung ist nötig, da der Zweck des Induktionsheizsystems die Erwärmung des Bauteils ist, aber eine Induktionsspule immer nur einen kleinen Bereich um den Leiter der Spule erwärmen kann. Unter der Annahme eines Bauteils, dessen flächige Ausdehnung groß gegenüber der Induktionsspule ist und das zumindest nacheinander an mehreren oder sogar allen Bereichen erwärmt werden soll, muss sich die Induktionsspule relativ zu dem Bauteil bewegen.

Konkret ist in einer bevorzugten Ausführungsform der Erfindung die Verschiebeeinheit durch mindestens eine Schiene und mindestens einen Schlitten realisiert. Hierbei ist der Schlitten dafür ausgelegt, sich auf der Schiene zu bewegen. Die Schiene gibt also die Richtung vor, entlang derer sich der Schlitten, und damit auch die Induktionsspule, bewegen können.

In der Praxis kann die Verschiebeeinheit auch zwei parallel angeordnete Schienen, also ein sogenanntes Schienenpaar, aufweisen, wobei dann auf dem Schienenpaar der Schlitten verschiebbar ist.

Vorzugsweise ist die Verschiebeeinheit so ausgestaltet, dass sie eine Bewegbarkeit der Induktionsspule in mehr als einer Richtung ermöglicht, insbesondere in zwei zueinander senkrecht stehenden Richtungen. Hierbei sind vor allem diejenigen Richtungen relevant, die eine Verschiebung der Induktionsspule lateral zu dem Bauteil ermöglichen. Die Verschiebeeinheit ist vorteilhafterweise so ausgestaltet, dass die Induktionsspule über die gesamte Fläche des Bauteils in der Draufsicht verschiebbar ist. Dies hat zur Folge, dass damit die gesamte der Induktionsspule entgegenstehende Oberfläche des Bauteils sukzessive erwärmt werden kann.

Der elektrische Kontakt zwischen der Schiene und dem Schlitten der Verschiebeeinheit kann beispielsweise mittels eines Schleifkontakts (auch: Gleitkontakt) realisiert sein.

In dem vorliegenden Induktionsheizsystem kann die Schiene beispielsweise als (wassergekühlte) Kupferschiene ausgebildet sein und der Schlitten einen Stromabnehmer aufweisen, der auf der Kupferschiene entlangfährt. Mit der Zeit ist ein gewisser Materialabrieb bei Schiene und/oder Stromabnehmer wahrscheinlich, was die Wahrscheinlichkeit von Ladungsüberschlägen erhöht. Da durch die erfindungsgemäße Ausgestaltung des Induktionsheizsystems die Spannung an den Schleifkontakten jedoch gering gewählt werden kann, kann die Wahrscheinlichkeit von Ladungsüberschlägen stark reduziert werden.

Die konkrete Platzierung des Kondensators hängt vom jeweiligen Einzelfall ab. Eine Möglichkeit ist, den Kondensator so nah an die Induktionsspule zu platzieren, dass Kondensator und Induktionsspule ein sogenanntes Induktionsmodul bilden und dies auch baulich, etwa durch ein gemeinsames Gehäuse, gekennzeichnet ist. Das gemeinsame Gehäuse ist allein schon deswegen vorteilhaft, da die elektrischen Leitungen zwischen Kondensator und Induktionsspule aufgrund der hohen Blindspannungen sehr berührempfindlich sind.

Der Kondensator ist in der Regel relativ voluminös, um die hohen Spannungen, die von der Induktionsspule induziert werden, aufnehmen zu können. Insofern kann es attraktiv bzw. notwendig sein, einen weiteren Kondensator bereitzustellen, der sich zwischen der Wechselspannungsversorgungseinrichtung und der Verschiebeeinheit befindet und der, zusammen mit dem Kondensator zwischen Verschiebeeinheit und Induktionsspule, den kapazitiven Widerstand des Reihenschwingkreises bildet. Durch die Aufteilung der Gesamtkapazität vor und nach der Verschiebeeinheit kann eine anwendungsspezifische Anpassung der Spannung über der Verschiebeeinheit und damit ein beliebiger Kompromiss zwischen Baugröße und Überschlagssicherheit erreicht werden.

Das erfindungsgemäße Induktionsheizsystem lässt sich besonders vorteilhaft bei der generativen Fertigung eines Bauteils einsetzen. Insofern ist ein weiterer Aspekt der Erfindung eine Vorrichtung zur generativen Fertigung eines Bauteils, die die folgenden Komponenten aufweist: eine Plattform, die dazu vorgesehen ist, um darauf einen pulver- oder drahtförmigen metallischen Werkstoff schichtweise aufzutragen; eine Primärheizeinrichtung, die dazu ausgebildet ist, einen auf die Plattform aufgetragenen pulver- oder drahtförmigen metallischen Werkstoff aufzuschmelzen; und eine Induktionsheizsystem. Die Induktionsspule des Induktionsheizsystems ist dabei oberhalb der Plattform verfahrbar und ist ausgebildet, den auf die Plattform aufgetragenen pulver- oder drahtförmigen metallischen Werkstoff zu erwärmen.

Als Primärheizeinrichtung kommen beispielsweise eine Laserstrahlquelle oder eine Elektronenstrahlquelle infrage. In diesem Fall besteht eine vorteilhafte Ausführungsform darin, einen Laserstrahl bzw. Elektronenstrahl der Laser- bzw. Elektronenstrahlquelle so anzuordnen, dass er durch ein Fenster (oder: Öffnung), das die Induktionsspule definiert, hindurchtreten kann und damit den auf die Plattform aufgetragenen pulver- oder drahtförmigen metallischen Werkstoff erwärmen kann. Das Fenster der Induktionsspule kann auch als Spuleninneres bezeichnet werden.

Nachfolgend wird die Erfindung anhand der beigefügten Abbildungen veranschaulicht. Die Abbildungen zeigen beispielhaft und schematisch ausgewählte Ausführungsformen ohne Beschränkung des beanspruchten Schutzumfangs.

Die Abbildungen zeigen:
- Fig. 1:: eine Vorrichtung zur generativen Fertigung eines Bauteils mit einem erfindungsgemäßen Induktionsheizsystem;
- Fig. 2:: ein elektrisches Schaltbild des Induktionsheizsystem der Fig. 1; und
- Fig. 3:: ein elektrisches Schaltbild eines herkömmlichen Induktionsheizsystem.

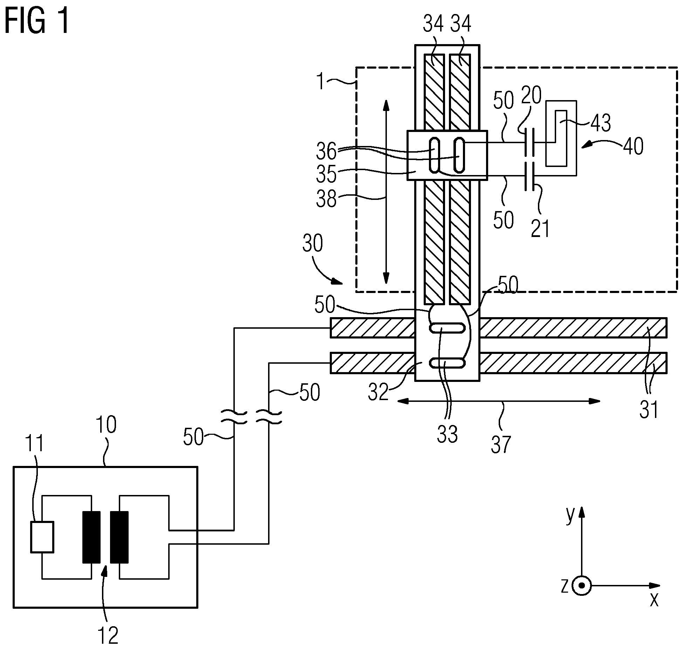

Die Abbildung 1 (auch als Fig. 1 bezeichnet) zeigt eine Vorrichtung zur generativen Fertigung eines Bauteils 1 mit einem erfindungsgemäßen Induktionsheizsystem. Die Vorrichtung umfasst eine Plattform, die dazu vorgesehen ist, um darauf einen pulver- oder drahtförmigen metallischen Werkstoff schichtweise aufzutragen sowie eine Primärheizeinrichtung, die dazu ausgebildet ist, einen auf die Plattform aufgetragenen pulver- oder drahtförmigen metallischen Werkstoff aufzuschmelzen. Diese Bestandteile der Vorrichtung sind Standardbestandteile einer Anlage zur generativen Bauteilfertigung (auch: additive Fertigung oder 3D-Druck) und sind in der Fig. 1 aus Gründen der Übersichtlichkeit nicht gezeigt. Ihre Ausgestaltung und Verbindung zueinander sind dem Fachmann auf dem Gebiet der generativen Fertigung, insbesondere des selektiven Laserschmelzens, wohlbekannt.

Die Vorrichtung weist ferner ein Induktionsheizsystem zum Erwärmen des Werkstoffes auf. Sowohl das Vorwärmen des noch nicht aufgeschmolzenen Werkstoffes als auch das Nachbehandeln des bereits aufgeschmolzenen Werkstoffes sind mit dem Induktionsheizsystem möglich. Prinzipiell ist auch ein induktives Erwärmen des metallischen Werkstoffes während des Aufschmelzens mittels beispielsweise einer Laserstrahl- oder Elektronenstrahlquelle möglich.

Das Induktionsheizsystem weist eine Wechselspannungsversorgungseinrichtung 10 auf, die aus einem Induktionsgenerator 11 und einem Transformator 12 besteht. Der Induktionsgenerator 11 erzeugt Wechselspannung mit einer effektiven Spannung von mehreren Hundert Volt bis zu einigen Kilovolt. Die Stromstärke ist dabei moderat und beträgt beispielsweise zwischen 10 A und 100 A. Um eine hohe Heizleistung durch die Induktionsspule zu erreichen, muss diese von einer hohen Stromstärke, die insbesondere höher als 100 A ist, durchflossen werden. Aus diesem Grund ist an den Induktionsgenerator 11 ein Transformator 12 angeschlossen. Der Transformator 12 wandelt die hohe Spannung des Induktionsgenerators 11 in eine niedrigere Spannung um, was direkt einen Anstieg der Stromstärke in dem Stromkreis am Ausgang des Transformators 12 zur Folge hat. Der Stromkreis am Eingang des Transformators 12 wird auch als "Generatorkreis" bezeichnet; der Stromkreis am Ausgang des Transformators 12 als "Arbeitskreis".

Die Wechselspannungsversorgungseinrichtung 10 ist mittels elektrischer Leitungen, die im Rahmen dieser Anmeldung auch als Zuleitungen 50 bezeichnet werden, mit einer Verschiebeeinheit 30 verbunden. Die Verschiebeeinheit 30 hat den Zweck, die sich an sie anschließende Induktionsspule 40 verschiebbar bezüglich einem ruhenden Bauteil 1 zu gestalten. Hierfür sind ein erster Schlitten 32 und ein zweiter Schlitten 35 jeweils mittels einer Steuereinrichtung ansteuerbar. Die Steuereinrichtung für die Verschiebeeinheit 30 ist aus Gründen der Übersichtlichkeit nicht in Fig. 1 gezeigt und auch in dieser Beschreibung wird darauf nicht näher eingegangen, da sie nicht den Kern dieser Erfindung betrifft.

Der erste Schlitten 32 befindet sich mittels zweier erster Schleifkontakte 33 auf einem ersten Schienenpaar 31. Die Schleifkontakte 33 sind beispielsweise aus einem elektrisch hochleitfähigen Metall, ebenso die beiden Schienen des ersten Schienenpaars 31. Als geeignetes Material für die Schleifkontakte 33 und das Schienenpaar 31 ist zum Beispiel Kupfer zu nennen. Die ersten Schleifkontakte 33 sind ihrerseits wiederum mittels elektrischer Leiter 50 mit einem zweiten Schienenpaar 34 verbunden. Das zweite Schienenpaar 34 bildet die Auflagefläche für den zweiten Schlitten 35, dessen zweite Schleifkontakte 36 mit den Schienen des zweiten Schienenpaars 34 elektrisch verbunden sind. Die zweiten Schleifkontakte 36 sind mittels Zuleitungen 50 mit der Induktionsspule 40 verbunden. Der erste Schlitten 32 ist entlang einer ersten Verschiebungsrichtung 37 hin und her bewegbar (hier entsprechend der x-Richtung); der zweite Schlitten 35 ist entlang einer zweiten Verschiebungsrichtung 38 hin und her bewegbar (hier entsprechend der y-Richtung). Für die Induktionsspule 40 folgt daraus, dass diese in einem durch die Verschiebeeinheit 30 definierten Bereich (oder: Fläche) verschiebbar ist.

Die Induktionsspule 40 ist in Fig. 1 (wie auch z.B. die Wechselspannungsversorgungseinrichtung 10) nicht maßstäblich gegenüber den übrigen Komponenten gezeichnet. Sie wird in den meisten realen Fällen deutlich kleiner sein. Der Übersichtlichkeit halber ist sie aber in Fig. 1 als große, doppelt gewundene Spule gezeichnet. Die Induktionsspule definiert dabei durch ihr Spuleninneres ein Fenster 43, durch das vorteilhafterweise ein Laserstrahl auf den zu bearbeitenden Werkstoff hindurchtreten kann.

Ein wesentlicher Bestandteil eines Induktionsheizsystems ist ein Kondensator, der zusammen mit der Induktionsspule einen Reihenschwingkreis, auch als Serienschwingkreis oder RCL-Schwingkreis bezeichnet, bildet. Aufgrund der hohen Ströme, die durch die Induktionsspule fließen, ist die Induktivität der Spule hoch und die Kapazität des Kondensators muss entsprechend groß gewählt werden. Daraus folgen eine gewisse bauliche Größe und Gewicht des Kondensators. Dies hat zur Folge, dass in herkömmlichen Induktionsheizsystemen der (oder die) Kondensator(en) in die Wechselspannungsversorgungseinrichtung mit verbaut wurden, da die Wechselspannungsversorgungseinrichtung mit Induktionsgenerator und Transformator ohnehin viel Platz und auch Gewicht beanspruchten. Oftmals sind der Induktionsgenerator und Transformator auch von einem gemeinsamen Gehäuse umgeben, so dass der Kondensator hierin auch gut untergebracht und geschützt werden konnte.

Im Fall einer stationären Induktionsspule, das heißt einer Induktionsspule, die relativ zu der Wechselspannungsversorgungseinrichtung unbeweglich ist, können als elektrische Leitungen zwischen dem an der Wechselspannungsversorgungseinrichtung befindlichen Kondensator und der Induktionsspule zum Beispiel gut isolierte, gegebenenfalls wassergekühlte elektrische Kabel verwendet werden, so dass es zu keinen Spannungsüberschlägen in den Zuleitungen kommt.

Im Fall einer bewegbaren Induktionsspule, also einer Induktionsspule, die relativ zu der Wechselspannungsversorgungseinrichtung beweglich ist, können unter Umständen wassergekühlte elektrische Kabel nicht verwendet werden, da diese für häufig auftretende Bewegungen nicht geeignet sind. Werden aber Kontaktschienen und Gleitkontakte verwendet, kommt es zu dem Problem potenzieller Spannungsüberschläge, so dass z.B. die Maximalleistung im Schwingkreis begrenzt werden muss.

Die Idee der vorliegenden Erfindung besteht darin, den Kondensator 20 nicht, wie herkömmlich, nahe der Wechselspannungsversorgungseinrichtung 10 zu platzieren, sondern zwischen der Verschiebeeinheit 30 und der Induktionsspule 40. Eine mögliche Position ist in Fig. 1 schematisch gezeigt.

Die Fig. 1 zeigt ferner einen zweiten Kondensator, der im Folgenden als Zusatzkondensator 21 bezeichnet wird. Dieser dient im Wesentlichen als zusätzlicher Kondensator, um mehr Flexibilität zu haben, um die Kapazität des Schwingkreises einzustellen.

Es muss im Einzelfall entschieden werden, ob genügend Platz vorhanden ist oder bereitgestellt werden kann, um den Kondensator 20 und gegebenenfalls den Zusatzkondensator 21 zwischen der Verschiebeeinheit 30 und der Induktionsspule 40 zu platzieren. Sollte dies schwierig sein, kann ein attraktiver Kompromiss zwischen den baulichen Zwängen einerseits und dem Bedürfnis andererseits, das Risiko von Spannungsüberschlägen zu reduzieren, darin bestehen, den Kondensator 20 nur gerade so groß wie möglich auszulegen und dafür einen weiteren Kondensator wie herkömmlich nahe der Wechselstromversorgungseinrichtung 10 zu platzieren. Die gesamte Kapazität des Reihenschwingkreises wird dann von dem Kondensator 20 nahe der Induktionsspule und dem weiteren Kondensator nahe der Wechselstromversorgungseinrichtung 10 gebildet.

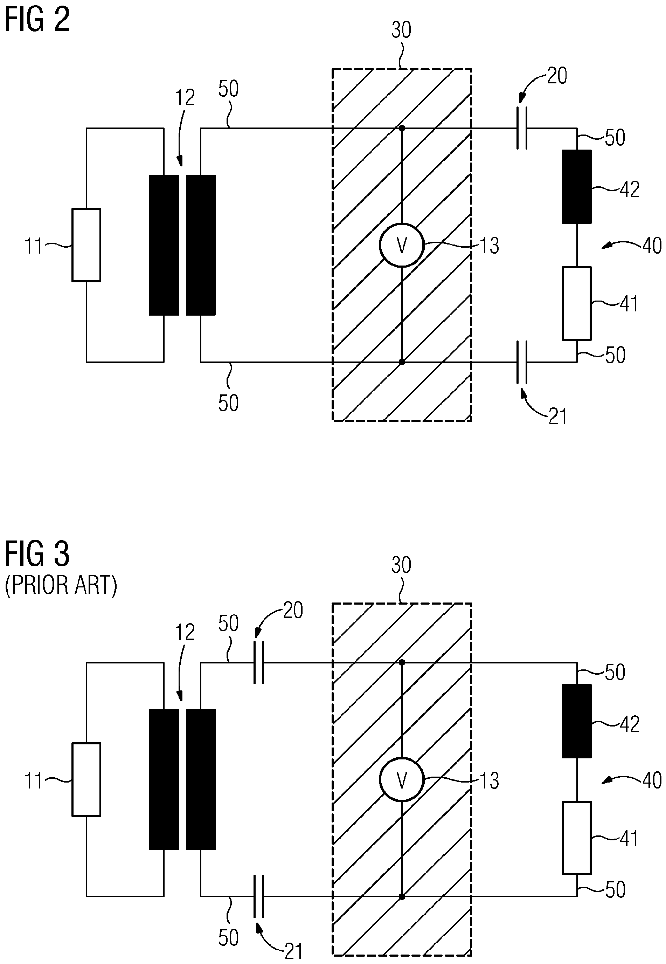

Die Abbildung 2 (auch als Fig. 2 bezeichnet) zeigt ein elektrisches Schaltbild der Induktionsheizsystem aus Fig. 1. Der Generatorkreis wird von dem Induktionsgenerator 11 und der einen Spule des Transformators 12 gebildet. Der Arbeitskreis wird von der zweiten Spule des Transformators 12, dem Kondensator 20, dem Zusatzkondensator 21 und der Induktionsspule 40 gebildet. Für die Induktionsspule 40 ist sowohl der ohmsche Widerstand 41 als auch der induktive Widerstand 42 in Fig. 2 eingezeichnet. Auch die Zuleitungen 50 haben einen ohmschen Widerstand und es treten damit einhergehend ohmsche Verluste auf (die größtenteils von der Wasserkühlung der Zuleitungen 50 aufgenommen und abgeführt werden). Diese ohmschen Verluste sind in Fig. 2 nicht eingezeichnet, da sie nicht den Kern der Erfindung ausmachen. In Fig. 2 ist die Verschiebeeinheit 30 ferner durch das schraffierte Rechteck symbolisiert.

Aufgrund der Platzierung des Kondensators 20 und des Zusatzkondensators 21 zwischen der Verschiebeeinheit 30 und der Induktionsspule 40 wird an einem Spannungsmessgerät 13 an der Verschiebeeinheit 30 - also beispielsweise an den Schleifkontakten, die besonders anfällig und kritisch für Spannungsüberschläge sind - nur die relativ niedrige Ausgangswechselspannung des Transformators 12 gemessen. Eingedenk der Tatsache, dass in trockener Luft als ganz grobe Daumenregel für ein Millimeter voneinander entfernte, offen liegende Kontakte ab ca. 1.000 Volt die Wahrscheinlichkeit für eine Spannungsüberschlag signifikant erhöht ist, ist das Risiko für einen Spannungsüberschlag bei einem Aufbau wie in Fig. 1 bzw. 2 gezeigt vernachlässigbar.

Für einen Aufbau wie in Abbildung 3 (auch als Fig. 3 bezeichnet) gezeigt, gilt dies jedoch nicht. Die Fig. 3 zeigt ein elektrisches Schaltbild einer herkömmlichen Induktionsheizsystem, in der der Kondensator 20 und der Zusatzkondensator 21 "vor" der Verschiebeeinheit 30, also zwischen der Wechselspannungsversorgungseinrichtung 10 und der Verschiebeeinheit 30 angeordnet sind. Alle anderen Komponenten in Fig. 3 entsprechen den Komponenten der Fig. 2, so dass diese aus Gründen der Knappheit nicht wiederholt werden.

Als Folge der unterschiedlichen Platzierung des Kondensators 20 und des Zusatzkondensators 21 werden in herkömmlichen Systemen auch in den Zuleitungen 50 an der Verschiebeeinheit 30, also beispielsweise auch an den Schleifkontakten 33, 36, hohe Spannungen aufgrund der Blindspannung im Reihenschwingkreis gemessen. Da dies keine virtuellen Spannungen, sondern real anliegende Spannungen sind, können sie auch mittels eines Spannungsmessgeräts 13, das an der Verschiebeeinheit 30 platziert ist, nachgewiesen werden. Bei entsprechend hoher Induktivität der Spule 41, Kapazität der Kondensatoren 20, 21 und anliegenden Stromstärke kann eine Blindspannung erzeugt werden, die in einem Bereich liegt, an dem Ladungsüberschläge wahrscheinlich werden.

Zusammenfassend ermöglicht die vorliegende Erfindung aufgrund einer geschickten Anordnung seiner Komponenten ein Induktionsheizsystem, das auch bei einer bewegbaren Induktionsspule ein hohes Maß an Betriebssicherheit ermöglicht, ohne Kompromisse bei der maximalen Heizleistung machen zu müssen.

## Patentansprüche

1. Induktionsheizsystem zur Erwärmung eines Bauteils (1), das Induktionsheizsystem umfassend eine Wechselspannungsversorgungseinrichtung (10), einen Kondensator (20), eine Verschiebeeinheit (30) und eine Induktionsspule (40), wobei
- die Wechselspannungsversorgungseinrichtung (10) einen Reihenschwingkreis, der von dem Kondensator (20) und der Induktionsspule (40) gebildet wird, mit Wechselspannung versorgt,
- die Verschiebeeinheit (30) eine Verschiebung der Induktionsspule lateral in mindestens einer Richtung relativ zu dem Bauteil (1) ermöglicht, und
- der Kondensator (20) zwischen der Verschiebeeinheit (30) und der Induktionsspule (40) angeordnet ist.

2. Induktionsheizsystem nach Anspruch 1,
wobei die Wechselspannungsversorgungseinrichtung (10) einen Induktionsgenerator (11) zur Erzeugung einer Eingangswechselspannung und einen Transformator (12) zur Umwandlung der Eingangswechselspannung in eine Ausgangswechselspannung aufweist.

3. Induktionsheizsystem nach einem der vorhergehenden Ansprüche,
wobei die Verschiebeeinheit (30) eine Schiene (31, 34) und einen Schlitten (32, 35) aufweist, wobei der Schlitten (32, 35) dafür ausgelegt ist, sich auf der Schiene (31, 34) zu bewegen und wobei die Schiene (31, 34) die Richtung (37, 38) definiert, entlang derer sich die Induktionsspule (40) bewegt.

4. Induktionsheizsystem nach Anspruch 3,
wobei der elektrische Kontakt zwischen der Schiene (31, 34) und dem Schlitten (32, 35) mittels eines Schleifkontakts (33, 36) realisiert ist.

5. Induktionsheizsystem nach einem der vorhergehenden Ansprüche,
wobei die Verschiebeeinheit (30) eine Verschiebung der Induktionsspule (40) lateral in zwei Richtungen (37, 38) relativ zu dem Bauteil (1) ermöglicht, wobei die zwei Richtungen (37, 38) insbesondere senkrecht aufeinander stehen.

6. Induktionsheizsystem nach Anspruch 5,
wobei die Verschiebeeinheit (30) eine Verschiebung der Induktionsspule (40) über die gesamte Fläche des Bauteils (1) in der Draufsicht ermöglicht.

7. Induktionsheizsystem nach einem der vorhergehenden Ansprüche,
wobei die Induktionsspule (40) und der Kondensator (20) ein mittels der Verschiebeeinheit (30) verschiebbares Induktionsmodul bilden und von einem gemeinsamen Gehäuse umgeben sind.

8. Induktionsheizsystem nach einem der vorhergehenden Ansprüche,
wobei der Reihenschwingkreis zumindest teilweise, insbesondere größtenteils, flüssigkeitsgekühlte elektrische Leitungen (50) aufweist.

9. Induktionsheizsystem nach einem der vorhergehenden Ansprüche,
wobei das Induktionsheizsystem einen weiteren Kondensator aufweist, der sich zwischen der Wechselspannungsversorgungseinrichtung (10) und der Verschiebeeinheit (30) befindet und, zusammen mit dem Kondensator (20) zwischen Verschiebeeinheit (30) und Induktionsspule (40), den kapazitiven Widerstand des Reihenschwingkreises bildet.

10. Vorrichtung zur generativen Fertigung eines Bauteils (1) mit einer Plattform, die dazu vorgesehen ist, um darauf einen pulver- oder drahtförmigen metallischen Werkstoff schichtweise aufzutragen, einer Primärheizeinrichtung, insbesondere eine Laserstrahlquelle oder Elektronenstrahlquelle, die dazu ausgebildet ist, einen auf die Plattform aufgetragenen pulver- oder drahtförmigen metallischen Werkstoff aufzuschmelzen, und einem Induktionsheizsystem nach einem der vorhergehenden Ansprüchen, wobei die Induktionsspule (40) oberhalb der Plattform verfahrbar ist und ausgebildet ist, den auf die Plattform aufgetragenen pulver- oder drahtförmigen metallischen Werkstoff zu erwärmen.

11. Vorrichtung nach Anspruch 10,
wobei die Primärheizeinrichtung als Laser- oder Elektronenstrahlquelle ausgebildet ist und die Induktionsspule (40) ein Fenster (43) definiert, durch das ein Laser- bzw. Elektronenstrahl der Laser- bzw. Elektronenstrahlquelle hindurchtreten und den auf die Plattform aufgetragenen pulver- oder drahtförmigen metallischen Werkstoff erwärmen kann.
